(19) **Europäisches Patentamt European Patent Office Office européen des brevets**

(11) **EP 1 707 993 B1**

(12) **FASCICULE DE BREVET EUROPEEN**

(45) Date de publication et mention de la délivrance du brevet:
**19.08.2009 Bulletin 2009/34**

(51) Int Cl.:
**G01V 1/30** (2006.01)

(21) Numéro de dépôt: **05290689.8**

(22) Date de dépôt: **29.03.2005**

(54) **Procédé et programme de recherche de discontinuites géologiques**

Methode und Computerprogramm zur Bestimmung von geologischen Diskontinuitäten

Method and computer program for the determination of geological discontinuities

(84) Etats contractants désignés:
**FR GB**

(43) Date de publication de la demande:
**04.10.2006 Bulletin 2006/40**

(73) Titulaire: **Total S.A.**
**92400 Courbevoie (FR)**

(72) Inventeurs:
- **Keskes, Naamen**
  **64000 Pau (FR)**
- **Guillon, Sébastien**
  **64000 Pau (FR)**
- **Berthoumieu, Yannick**
  **33400 Talence (FR)**
- **Donias, Marc**
  **33200 Bordeaux (FR)**

(74) Mandataire: **Hirsch & Associés**
**58, avenue Marceau**
**75008 Paris (FR)**

(56) Documents cités:
**EP-A- 1 058 131       FR-A- 2 765 707**
**US-A- 4 908 872**

- **ZIOU D: "The influence of edge direction on the estimation of edge contrast and orientation" avril 2001 (2001-04), PATTERN RECOGNITION, ELSEVIER, KIDLINGTON, GB, PAGE(S) 855-863 , XP004321309 ISSN: 0031-3203 * page 855 * * page 856, colonne de gauche * * page 862 * * page 863, colonne de gauche ***
- **PITAS I ET AL: "TEXTURE ANALYSIS AND SEGMENTATION OF SEISMIC IMAGES" 23 mai 1989 (1989-05-23), MULTIDIMENSIONAL SIGNAL PROCESSING, AUDIO AND ELECTROACOUSTICS. GLASGOW, MAY 23 - 26, 1989, INTERNATIONAL CONFERENCE ON ACOUSTICS, SPEECH & SIGNAL PROCESSING. ICASSP, NEW YORK, IEEE, US, PAGE(S) 1437-1440 , XP000089134 * le document en entier * * figure 2 ***
- **MONGA O ET AL: "3D EDGE DETECTION USING RECURSIVE FILTERING: APPLICATION TO SCANNER IMAGES" CVGIP IMAGE UNDERSTANDING, ACADEMIC PRESS, DULUTH, MA, US, vol. 53, no. 1, janvier 1991 (1991-01), pages 76-87, XP000173953 ISSN: 1049-9660**

**Description**

La présente invention concerne la recherche d'un plan de fracture dans un ensemble tridimensionnel de mesures, appelé bloc tridimensionnel par la suite. Elle se rapporte aux domaines de la géologie, et plus particulièrement, de la sismique.

Il est connu, notamment dans l'exploration pétrolière, de déterminer la position des réservoirs pétroliers à partir de l'interprétation de mesures géophysiques effectuées depuis la surface du sol ou bien dans des puits de forage. Ces mesures impliquent typiquement l'émission dans le sous-sol d'une onde et la mesure des diverses réflexions de l'onde sur les structures géologiques recherchées - surfaces séparant des matériaux distincts, fractures, etc.

Les mesures conduisent à construire des images du sous-sol représentant un empilement de couches sédimentaires affectées par des discontinuités. On appelle ici discontinuité toute rupture de continuité horizontale ou pseudo-horizontale de ces couches. Les discontinuités verticales inter-couches, de nature sédimentaire, ne sont pas prises en considération dans cette description.

US-A-5,563,949 décrit un procédé d'exploration pétrolière, dans lequel on divise le volume d'exploration en cellules; dans chaque cellule, on calcule une valeur de cohérence en considérant les valeurs de corrélations entre des paires de traces situées dans des plans verticaux différents. Dans ce document, on utilise des fenêtres de corrélation courtes. Une bonne valeur de corrélation est représentative d'une cellule litée. Une mauvaise valeur de corrélation est représentative de discontinuités, sédimentaires ou structurelles, sans qu'il soit possible de distinguer entre des discontinuités sédimentaires ou structurelles.

US-A-5 831 935 et US-A-5 986 974 présentent une détection de failles en utilisant un attribut de différence. Cette détection ne prend pas en compte les distinctions entre les différents marqueurs géologiques, comme les chenaux sédimentaires, les strates, les failles ainsi que le bruit.

Le document FR-A-2 765 707 divulgue une méthode de détection et de détermination de caractéristiques d'une image multidimensionnelle liées à des points remarquables de ladite image, **caractérisée en ce qu**'elle consiste à évaluer la variabilité d'un pendage local d'un premier point de l'image par rapport à au moins un autre point situé au voisinage dudit premier point, en calculant l'anisotropie locale sur le champ de gradients dudit point, ladite anisotropie étant dépendante de termes liés à une dispersion des orientations et au module des vecteurs gradients, et en ce qu'au moins un desdits termes est pondéré

Le document EP-A-1 058 131 divulgue une méthode de réduction du bruit en sismique et en sismique dérivée de données des propriétés rocheuses en générant une information de révélation de données concernant une variation spatiale de la structure du sous-sol, de la stratigraphie, de la lithologie et du contenu en fluide de la sismique et de la sismique dérivée de données des propriétés rocheuses et en analysant et interprétant ces données.

Les solutions de détermination de discontinuités de l'art antérieur n'opèrent qu'une recherche locale de ces discontinuités, ce qui entraîne le mélange de plusieurs informations de type structurale, telles des failles, sédimentaire, telles des chenaux de sédiments, ou simplement des informations dues au bruit. Elles ne tiennent notamment pas compte des spécificités des discontinuités recherchées, des failles. Elles n'opèrent donc pas une approche globale des failles du sous-sol étudié.

Dans la détermination de discontinuités, il est nécessaire d'éliminer les informations sédimentaires et le bruit et ne garder que les informations structurelles relatives aux discontinuités.

Dans la suite, on appellera gradient en un point d'une image une quantité vectorielle représentative de la variation de l'intensité ou amplitude autour de ce point de l'image. Dans chaque direction, on peut calculer une composante du vecteur gradient en considérant le rapport entre la différence d'intensité entre deux pixels voisins et la distance des deux pixels suivant cette direction; on peut aussi considérer plus de deux pixels. Dans une application sismique, l'intensité d'un pixel dans l'image est directement proportionnelle à l'amplitude du signal sismique.

L'invention propose en conséquence un procédé de recherche de discontinuités dans une image, comprenant les étapes de :

- calcul du gradient en plusieurs points de l'image ;
- autour d'un point principal, caractérisation d'au moins deux fenêtres de points dont les gradients ont été calculés ;
- évaluation de l'hétérogénéité de la distribution des gradients dans les fenêtres ;
- sélection de la fenêtre maximisant l'hétérogénéité et mesure de l'orientation de cette fenêtre ; et
- détermination des discontinuités en fonction de la valeur d'hétérogénéité et de l'orientation de la fenêtre sélectionnée.

Dans un mode de réalisation, le procédé comprend, avant l'étape de calcul du gradient, une étape de lissage pour au moins un point avec ses points voisins.

Avantageusement, l'étape de caractérisation comprend une étape de partition de toutes les fenêtres en sous-fenêtres alignées et l'étape d'évaluation comprend la multiplication des hétérogénéités des distributions des gradients dans les sous-fenêtres.

On peut encore prévoir, après l'étape de sélection, une étape de pondération des valeurs d'hétérogénéité de la distribution des gradients dans la fenêtre sélectionnée en fonction du caractère aléatoire de la distribution de ces valeurs d'hétérogénéité.

Les fenêtres sont de préférence allongées.

On peut encore prévoir que :

- l'étape de caractérisation de fenêtres de points dont les gradients ont été calculés est opérée autour de plusieurs points principaux ;
- l'étape de sélection est opérée pour la fenêtre maximisant l'hétérogénéité autour de chaque point principal et l'étape de mesure est opérée pour les orientations des fenêtres sélectionnées ;
- l'étape de détermination des discontinuités est opérée en comparant les fenêtres sélectionnées.

Dans ce cas, le procédé peut comprendre, entre l'étape de sélection et de mesure et l'étape de détermination des discontinuités, les étapes suivantes :

- pour un point principal, définition d'un cadre orienté selon l'orientation de la fenêtre maximisant l'hétérogénéité de ce point principal et comprenant ce point principal et un ou plusieurs points principaux ; et
- calcul de la valeur d'hétérogénéité moyenne des fenêtres maximisant l'hétérogénéité des points principaux de ce cadre et attribution de cette valeur comme valeur d'hétérogénéité au point principal pour lequel le cadre est défini.

Il est alors possible que le calcul de la valeur d'hétérogénéité moyenne des fenêtres maximisant l'hétérogénéité des points principaux du cadre soit effectué avec les valeurs d'hétérogénéité des points principaux de ce cadre pondérées en fonction de l'écart angulaire des fenêtres maximisant l'hétérogénéité de ces points avec l'orientation du cadre.

De nouveau, le cadre est avantageusement allongé.

L'invention concerne aussi un procédé de recherche d'une discontinuité dans un ensemble tridimensionnel de mesures; une discontinuité tridimensionnelle est reconstruite à partir des discontinuités déterminées par l'application du procédé mentionné ci-dessus à des coupes de l'ensemble tridimensionnel.

L'invention propose encore un programme informatique résidant sur un support lisible par ordinateur, comprenant des moyens de code de programme informatique adaptés pour effectuer sur un ordinateur toutes les étapes de l'un ou l'autre de ces procédés. L'invention concerne enfin un système comprenant une mémoire contenant un tel programme, une unité logique de traitement du programme et une unité d'affichage.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, une représentation schématique d'une fenêtre de points en l'absence de discontinuité;
- figure 2, une représentation schématique de la distribution des gradients d'une fenêtre de points en l'absence de discontinuité ;
- figure 3, une représentation schématique de l'approximation elliptique de la distribution des gradients d'une fenêtre de points en l'absence de discontinuité ;
- figure 4, une représentation schématique d'une fenêtre de points en présence d'une discontinuité;
- figure 5, une représentation schématique de l'approximation elliptique de la distribution des gradients d'une fenêtre de points en présence d'une discontinuité;
- figure 6, une représentation schématique de fenêtres de points autour d'un point principal ;
- figure 7, une représentation schématique de fenêtres de points partitionnées autour d'un point principal ;
- figure 8, une représentation schématique d'une distribution d'hétérogénéité autour d'un point principal en présence d'une faille ;
- figure 9, une représentation schématique d'une distribution d'hétérogénéité autour d'un point principal en présence de bruit ;
- figure 10, une représentation schématique d'une fenêtre de points en présence d'une discontinuité dont une partie ne coupe aucun horizon géologique ;
- figure 11, une représentation schématique d'une fenêtre de filtrage directionnel autour d'un point ;
- figure 12, une représentation schématique de deux directions de traitement de coupes d'un ensemble tridimensionnel ;
- figure 13, une représentation schématique de trois directions de traitement de coupes d'un ensemble tridimensionnel.

L'invention propose un procédé de recherche de discontinuités dans une image. Ce procédé permet la détection des discontinuités, i.e. des failles, en se fondant sur l'hétérogénéité de la distribution des gradients des points de l'image étudiée. L'hétérogénéité de la distribution des gradients est caractéristique des discontinuités dans un milieu stratifié.

L'image peut être une coupe d'un ensemble tridimensionnel de mesures, tel le sous-sol, qui comprend de nombreuses structures géologiques différentes comme les chenaux de sédiments, des failles, tout autre horizon ou marqueur géologique, ainsi que du bruit. La recherche d'une discontinuité dans cette image correspond à la recherche d'une discontinuité d'un de ces horizons géologiques ou sismiques. L'image est avantageusement stratifiée.

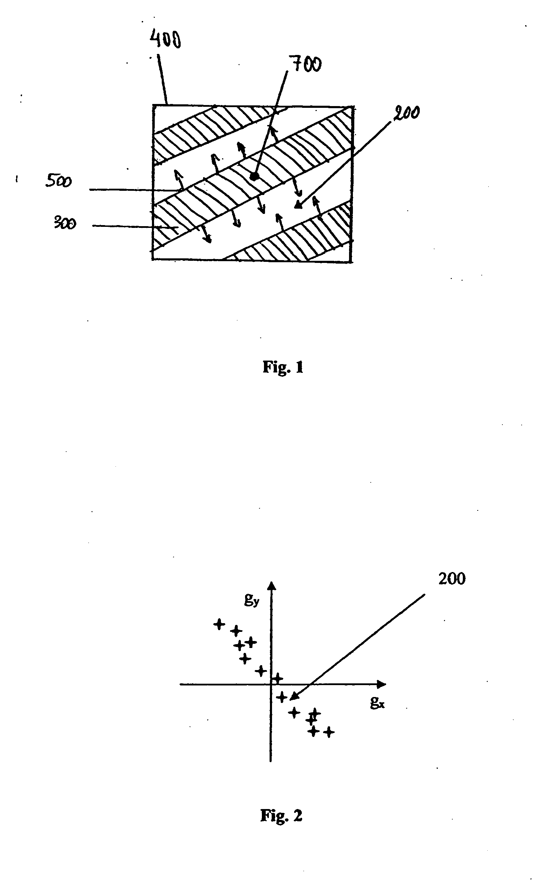

La figure 1 est une représentation schématique d'une fenêtre 400 de points en l'absence de discontinuité. La figure 1 montre des gradients de l'amplitude du signal sismique 200 sur des horizons sismiques 300 d'une fenêtre 400 de points, i.e. une portion d'une image 100. Chacun de ces gradients 200 représente la valeur du gradient 200 en un point 500 de l'image, i.e. les variations d'amplitude ou d'intensité du signal, de l'image 100 en ce point 500.

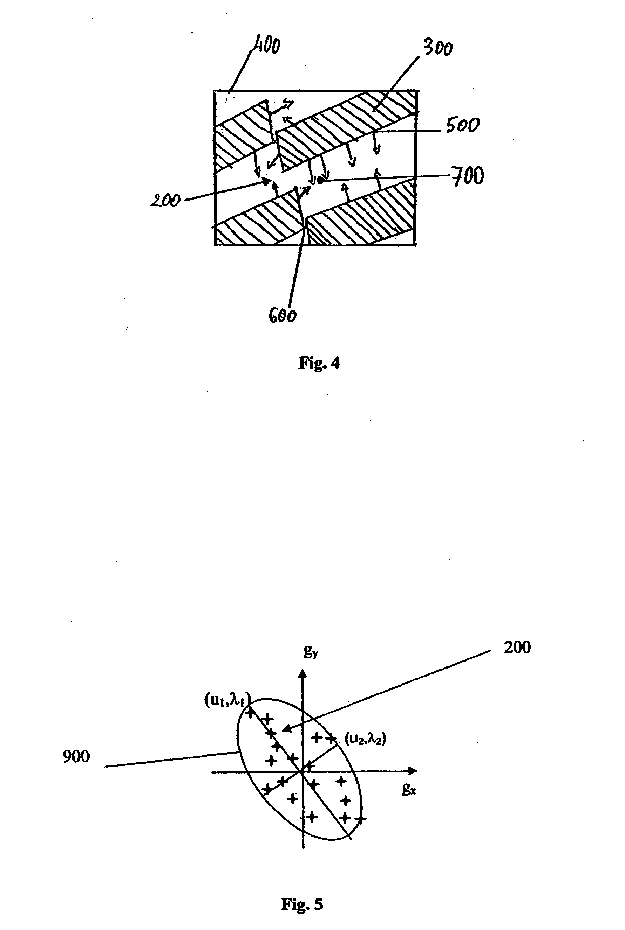

La figure 4 est une représentation schématique d'une fenêtre 400 de points en présence d'une discontinuité 600 des horizons sismiques 300.

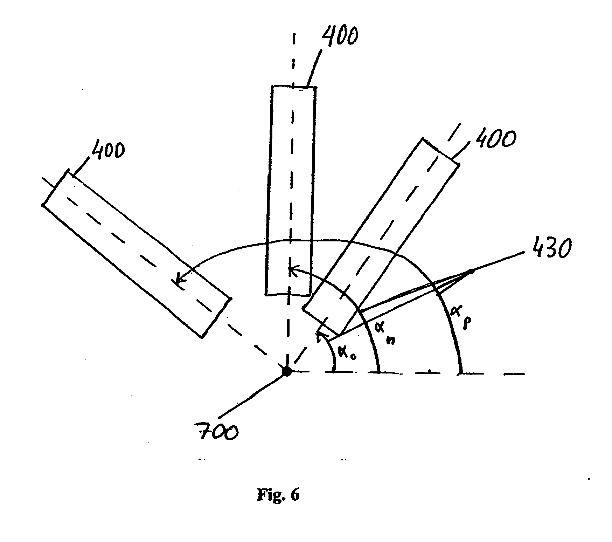

La figure 6 est une représentation schématique de fenêtres 400 de points autour d'un point principal 700 de l'image. La figure 6 montre des fenêtres d'angle d'orientation $\alpha_0$, $\alpha_n$ et $\alpha_p$ 430 dont la forme allongée a pour but de maximiser la présence de points de discontinuité 600 dans le cas de faille. Ces fenêtres comprennent un ensemble de points de l'image, et éventuellement le point principal 700 autour duquel elles sont disposées.

Le procédé de recherche de discontinuités 600 dans une image 100 comprend d'abord l'étape de calcul du gradient 200 en tous points 500 de l'image. Ensuite, autour d'un point principal 700 de l'image, une étape de caractérisation de fenêtres 400 de points 500 dont le gradient a été calculé est opérée, cette étape permettant ensuite de circonscrire la recherche de discontinuité 600 à des ensembles groupés de formes variées, i.e. ces fenêtres, de points dont le gradient a été calculé. De plus, une étape d'évaluation de l'hétérogénéité de la distribution des gradients 200 dans la ou les fenêtres 400 est effectuée, ceci permettant de mesurer ce critère caractéristique de la présence de discontinuités. En outre, une sélection de la fenêtre 400 maximisant l'hétérogénéité ainsi qu'une mesure de l'orientation de cette fenêtre sont réalisées de manière à déterminer la fenêtre 400, i.e. l'ensemble groupé de points dont le gradient a été calculé, pour laquelle le critère de présence d'une discontinuité 600 est le plus rempli c'est-à-dire pour laquelle l'hétérogénéité de la distribution des gradients est la plus forte. Enfin, une détermination des discontinuités 600 est opérée avec les valeurs d'hétérogénéité et d'orientation de la fenêtre 400 sélectionnée. On peut simplement considérer la fenêtre sélectionnée autour du point principal considéré. On peut aussi déterminer qu'une discontinuité est présente uniquement lorsque la valeur de l'hétérogénéité dans les fenêtres sélectionnées pour les différentes points est supérieure à une valeur minimale de l'hétérogénéité.

Une discontinuité 600 géologique, telle une faille, est considérée localement comme un bruit venant perturber la continuité des autres horizons sismiques 300, tels une strate sédimentaire. Ainsi, pour détecter la présence ou l'absence de discontinuité 600, le procédé utilise la mesure de l'hétérogénéité C de la continuité des horizons sismiques 300. Si l'hétérogénéité C est forte, la probabilité de présence d'anomalies, i.e. d'une discontinuité 600, est forte.

Ce procédé de mesure d'hétérogénéité et de recherche du maximum d'hétérogénéité dans les fenêtres 400 définies par les angles 430 permet d'améliorer l'art antérieur en offrant une meilleure visibilité des discontinuités 600 déterminées sur les images 100 étudiées. La forme pseudo verticale et allongée des fenêtres 400 permet avantageusement d'éliminer les discontinuités sédimentaires ou dues au bruit qui ont par définition une faible consistance verticale. Cela permet également de déterminer automatiquement les plans de discontinuités 600, telles des failles, dans la mesure où l'information disponible, i.e. la détermination des discontinuités 600 de l'image, suite à l'application du procédé est uniquement liée à l'information structurale, i.e. les discontinuités 600, et non à l'information sédimentaire, telle les chenaux formés par les sédiments, voire un bruit. Cela permet en outre d'améliorer l'analyse des relais, des réseaux de discontinuités 600, i.e. de failles. La précision de l'étude d'un réservoir du sous-sol et l'analyse des étanchéités de ce réservoir, du sous-sol, sont donc améliorées. Les discontinuités sont par ailleurs caractérisées dans leur globalité, ou du moins par morceaux, et non localement. Les discontinuités sont déterminées par leur alignement.

La mesure d'hétérogénéité est réalisée par une analyse statistique des gradients 200. L'analyse statistique est opérée en utilisant la méthode d'Analyse en Composantes Principales (ACP).

Les gradients peuvent être calculés par la méthode de Deriche ou par une approximation locale de cette méthode. Le gradient 200 d'un point peut ainsi être calculé en appliquant cette méthode de Deriche à partir du carré des 5 points voisins de ce point de calcul. Il faut rappeler que les gradients 200 sont orientés dans le sens de la plus grande variation d'intensité. Dans le cas d'une image 100 sismique, ces gradients 200 sont donc orthogonaux aux horizons sismiques 600.

En ce qui concerne l'analyse statistique des gradients, le principe de la méthode ACP est le suivant. Considérant un point principal 700 de coordonnées (x, y) dans l'image ; considérant une fenêtre 400 de points 500 de l'image, qui comprend donc un ensemble de n points 500 de l'image, cette fenêtre étant disposée autour du point 700 principal ; considérant l'ensemble $\{G_i = (g_{xi}, g_{yi})\}$ des n gradients 200 définis aux n points 500 de la fenêtre disposée autour du point principal 700 de coordonnées (x,y), la méthode ACP va d'abord réaliser une décomposition en éléments propres de la matrice de covariance A de l'ensemble $\{G_i = (g_{xi}, g_{yi})\}$ des n gradients 200, chaque gradient étant caractérisé par son abscisse $g_x$ et son ordonnée $g_y$ :

$$A = \begin{pmatrix} \sum_i g_{xi}^2 & \sum_i g_{xi} \cdot g_{yi} \\ \sum_i g_{xi} \cdot g_{yi} & \sum_i g_{yi}^2 \end{pmatrix}$$

.

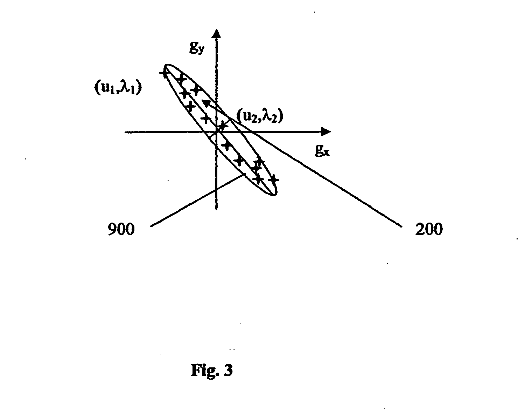

La figure 2 est une représentation schématique de gradients 200 d'une fenêtre 400 de points en l'absence de discontinuité 600. Elle montre l'ensemble $\{G_i = (g_{xi}, g_{yi})\}$ des n gradients 200 calculés à partir d'un point principal 700 de la figure 1 et de n points de la fenêtre 400 de la figure 1 pour lesquels le gradient est calculé. La figure 3 est une représentation schématique de l'approximation elliptique de gradients 200 d'une fenêtre 400 de points en l'absence de discontinuité, en l'occurrence l'approximation de cet ensemble de n gradients 200 présentés à la figure 2 par une ellipse 900 dont la direction et l'allongement sont donnés respectivement par les vecteurs propres $u_i$ et les valeurs propres $\lambda_i$ de la matrice A.

La figure 4 représente les mêmes éléments que ceux présentés à la figure 1 mais concernant une fenêtre 400 comprenant une discontinuité 600. La figure 5 est une représentation schématique de l'approximation elliptique de gradients d'une fenêtre de points en présence d'une discontinuité. Elle montre donc les mêmes éléments que ceux de la figure 3 mais corrélés aux données décrites de la figure 4. La comparaison des figures 1 et 3 aux figures 4 et 5 montre qu'en présence d'une discontinuité 600 comme dans la figure 4, l'ellipse 900 tend à s'élargir (figure 5) : l'allongement du second axe $\lambda_2$ est un indicateur de présence de discontinuités 600, il caractérise l'hétérogénéité des gradients.

Concernant l'étude des discontinuités 600 autour d'un point principal 700, le procédé caractérise au moins une fenêtre 400 de points dont le gradient a été calculé et disposée autour du point principal 700.

La sélection de la fenêtre 400 maximisant l'hétérogénéité parmi plusieurs fenêtres 400 disposées autour d'un point principal 700 permet d'obtenir la zone de points, délimitée par la fenêtre 400 de maximisation, autour de ce point principal 700 dans laquelle la probabilité de présence d'une discontinuité 600 est la plus forte.

Les discontinuités 600 sont déterminées par la corrélation entre des fenêtres 400 sélectionnées, leur valeur d'hétérogénéité, leur orientation $\alpha$ 430, i.e. leur alignement respectifs et leur proximité.

La multiplication du nombre de fenêtres 400 autour d'un point principal 700 permet d'optimiser la sélection.

Dans la mesure où les discontinuités 600 sont souvent alignées, la recherche d'une discontinuité 600 est avantageusement opérée en utilisant des fenêtres 400 dont les formes épouseraient avantageusement celles d'une discontinuité 600. Ainsi, la taille et la morphologie de la fenêtre 400 d'analyse sont deux éléments permettant d'optimiser la détermination d'une discontinuité 600. Ainsi, les discontinuités 600 recherchées étant souvent alignées, il est avantageux d'utiliser des fenêtres 400 sensiblement verticales, i.e. linéiques, allongées. Il est avantageux que la hauteur, plus longue que la base, de la fenêtre soit finalement dirigée dans la direction de l'orientation de la fenêtre de maximisation. Ceci permet d'avoir une fenêtre de forme épousant au mieux une zone ayant une forte probabilité de contenir une discontinuité. La taille de la fenêtre 400 de calcul doit être appréciée en fonction des données de l'image 100, de l'ensemble tridimensionnel étudiés dont dispose l'utilisateur. Notamment, la taille de la fenêtre 400 dépend avantageusement de l'échelle des variations des données de l'image 100 étudiée comme les horizons géologiques présents dans l'image.

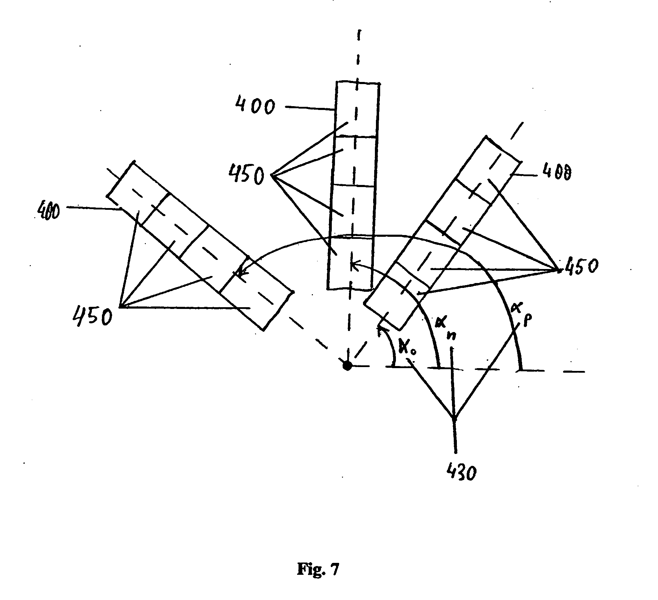

La figure 7 est une représentation schématique de fenêtres de points partitionnées autour d'un point principal. La figure 7 montre des fenêtres d'angle d'orientation $\alpha_0$, $\alpha_n$ et $\alpha_p$ 430. Elle montre également une partition des fenêtres 400 en sous-fenêtres 450, i.e. morceaux. Afin d'assurer dans une fenêtre un fort taux de discontinuité, i.e. une forte valeur d'hétérogénéité, cette fenêtre peut être partitionnée en plusieurs sous-fenêtres 450. Le calcul de l'hétérogénéité peut être effectué à partir de la multiplication des hétérogénéités calculées dans les sous-fenêtres 450 d'une fenêtre 400. Ceci permet d'obtenir une valeur d'hétérogénéité forte dans une fenêtre si et seulement si les discontinuités 600 sont présentes dans toutes les sous-fenêtres 450. Ceci permet donc une détermination des discontinuités 600 avantageuse grâce à une meilleure sélection d'une fenêtre 400 de maximisation caractérisant mieux la discontinuité 600.

L'allongement du second axe $\lambda_2$ de l'ellipse 900 d'approximation d'un ensemble de gradients 200 est un indicateur de présence de discontinuités 600, il caractérise l'hétérogénéité des gradients. Néanmoins, l'utilisation de ce critère d'allongement du second axe $\lambda_2$ pour détecter les discontinuités 600 est tributaire de l'amplitude locale du signal sismique. Cette amplitude peut donner de grandes variations sur l'image 100. Il est avantageux de normaliser la détection des discontinuités sur l'ensemble de l'image. Cette normalisation peut être effectuée par la méthode AGC (Automatic Gain Control) appliquée sur l'image 100. Cette méthode consiste à normaliser un point de l'image par la moyenne locale des amplitudes estimée sur le voisinage de ce point.

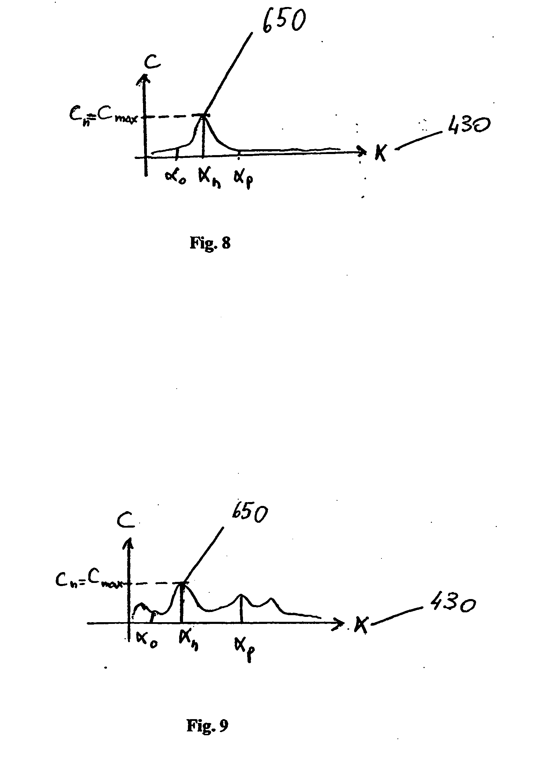

La figure 8 est une représentation schématique d'une distribution d'hétérogénéité autour d'un point principal en présence d'une faille. Elle montre la distribution des valeurs d'hétérogénéité C des fenêtres en fonction de l'orientation $\alpha$ 430. Sont représentées sur ce schéma les orientations $\alpha_0$, $\alpha_n$ et $\alpha_p$ 430 de fenêtres, telles que représentées à la figure 6, en présence d'une faille seulement dans la fenêtre d'orientation $\alpha_n$. La courbe de la figure 8 est caractéristique de la présence d'une faille. La distribution de la valeur d'hétérogénéité C est très resserrée autour de la position d'hétérogénéité maximale $C_n$ 650 pour la fenêtre d'orientation $\alpha_n$.

La figure 9 est une représentation schématique d'une distribution d'hétérogénéité autour d'un point principal en présence de bruit. Elle montre la distribution des valeurs d'hétérogénéité C des fenêtres en fonction de l'orientation $\alpha$ 430. Sont représentées sur ce schéma les orientations $\alpha_0$, $\alpha_n$ et $\alpha_p$ 430 de fenêtres, telles que représentées à la figure 6, dans une zone bruitée donc dans le cas où les causes de l'hétérogénéité sont diverses. La distribution de la valeur d'hétérogénéité C y est alors plus aléatoire. Ainsi, comme représenté sur la figure, des hétérogénéités fortes peuvent être constatées dans certaines fenêtres, comme celles d'orientation $\alpha_n$ et $\alpha_p$, tandis qu'une plus faible hétérogénéité des gradients sera présente dans d'autres fenêtres, telle celle d'orientation $\alpha_0$, alors même qu'aucune discontinuité n'est présente autour du point principal étudié. En effet, en présence d'une discontinuité 600 telle une faille autour d'un point principal 700, cette discontinuité 600, généralement linéaire, n'est le plus souvent présente que dans une direction. Il existe néanmoins des exceptions à ce principe, notamment dans le cas d'une intersection de failles.

Il est donc avantageux d'améliorer l'appréciation de l'hétérogénéité en pondérant autour d'un point principal 700 la valeur d'hétérogénéité C des différentes fenêtres 400 en fonction du caractère aléatoire de la distribution des valeurs d'hétérogénéité C. Considérant sur la distribution des valeurs d'hétérogénéité C($\alpha$) en fonction de l'angle d'orientation $\alpha$ 430, une telle pondération peut être effectuée en mesurant la moyenne $\overline{\alpha}$ des orientations $\alpha$ 430 ainsi que la variance $\sigma_\alpha$. Si l'on note $\alpha_{max}$ l'orientation $\alpha$ 430 de la fenêtre 400 de maximisation où l'hétérogénéité est maximale, alors on pondère la valeur d'hétérogénéité maximale $C_{max}$ par la fonction :

$$C_{max} = C_{max}.\exp(-\frac{(\alpha_{max}-\overline{\alpha}).(\alpha_{max}-\overline{\alpha})}{2.k^2})/\sigma_\alpha \qquad (30)$$

avec k un coefficient de pondération (plus k est faible et plus on favorise les distributions avec un seul pic resserré, et donc les présences de faille).

En cas d'une zone bruitée, cette fonction de pondération 30 opère une diminution de la valeur d'hétérogénéité C de la fenêtre 400 de maximisation. En effet, dans une zone bruitée, la moyenne $\overline{\alpha}$ des orientations est loin de $\alpha_{max}$, i.e. la valeur $\alpha$ 430 où l'hétérogénéité est maximale, et la variance $\sigma_\alpha$ est forte. L'application de la formule de pondération précédente 30 à la valeur d'hétérogénéité de la fenêtre de maximisation autour du point principal 700 étudié diminue donc la valeur d'hétérogénéité.

A l'inverse, en présence d'une discontinuité 600, comme le représente la figure 8, la variance $\sigma_\alpha$ est faible, et la moyenne $\overline{\alpha}$ des orientations est proche de $\alpha_{max}$. Dans ce cas, l'application de la fonction de pondération 30 entraîne une augmentation de la valeur d'hétérogénéité de la fenêtre de maximisation.

Dans ce qui précède, on a décrit l'application du procédé en un point principal de l'image. L'étape de caractérisation de fenêtres 400 de points dont le gradient a été calculé peut avantageusement être opérée autour de plusieurs points principaux 700. Ceci permet d'obtenir une pluralité d'informations sur l'éventuelle présence de discontinuités 600 dans une image 100. On peut choisir le nombre de points principaux en fonction de la taille des fenêtres et de l'orientation de ces fenêtres. Par exemple, pour des fenêtres de L x m pixels, verticales ou pseudo-verticales formant avec la verticale un angle avariant d'un angle limite $-\alpha_{lim}$ à un angle limite $+\alpha_{lim}$, on peut choisir des points principaux répartis

- avec une distance verticale de l'ordre de $L.\cos\alpha_{lim}$ pixels, ou de $0,8 \times L.\cos\alpha_{lim}$
- avec une distance horizontale de l'ordre de $m.\sin\alpha_{lim}$ ou de $0,8 \times m.\sin\alpha_{lim}$

De tels choix assurent que les fenêtres autour des points principaux balayent l'ensemble de l'image sans laisser de trous.

Notons que l'on peut aussi considérer que tout point de l'image est un point principal. Le recouvrement des fenêtres est alors maximal.

L'étape de sélection est opérée pour la fenêtre 400 maximisant l'hétérogénéité autour de chaque point principal 700 et l'étape de mesure est opérée pour les orientations des fenêtres sélectionnées, ce qui permet d'obtenir en chaque point principal 700 d'étude une fenêtre optimisant le critère de présence d'une discontinuité disposée autour de chaque point principal. L'étape de détermination s'effectue en comparant les fenêtres sélectionnées. La détermination des discontinuités est notamment réalisée en comparant les valeurs d'hétérogénéité, les orientations et/ou la proximité des fenêtres. La corrélation de ces différents facteurs permet de déterminer une discontinuité, voire des discontinuités distinctes. Par exemple, on peut retenir les fenêtres de points principaux adjacents, présentant

- une orientation égale ou différant de moins de 10°;

**EP 1 707 993 B1**

- un facteur d'hétérogénéité identique, ou avec une différence de moins de 20%.

L'utilisation de plusieurs points principaux permet de construire ou déterminer, par assemblage des fenêtres autours des points principaux, des failles d'une dimension supérieure à la dimension de la fenêtre considérée. On limite la quantité de calculs en limitant la taille des fenêtres, sans pour autant que cette limitation sur la taille des fenêtres impose une limitation sur la taille des failles déterminées.

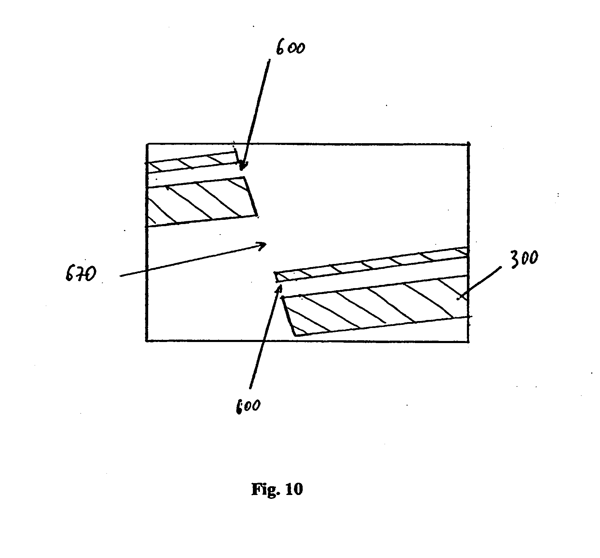

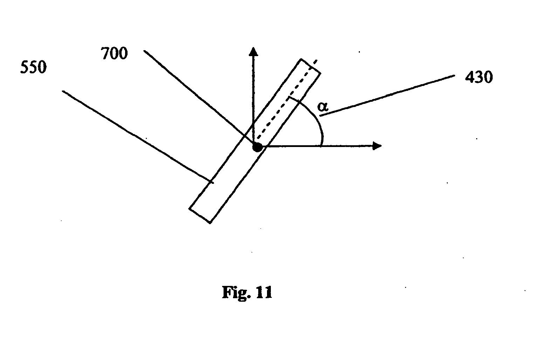

La figure 10 est une représentation schématique d'une fenêtre 400 de points en présence d'une discontinuité 600 dont une partie ne coupe aucun horizon géologique. En effet, la discontinuité 600 peut ne pas être continue sur l'image 100 telle qu'analysée, et ce notamment pour des raisons de difficultés de reconstruction du signal, de présence d'informations sédimentaires ou d'autres horizons géologiques pouvant être coupés par la discontinuité 600. La discontinuité ne peut ainsi être aisément déterminée. Il est dès lors avantageux de renforcer la continuité de la discontinuité 600, c'est-à-dire de caractériser la présence de la discontinuité dans une zone 670 dans laquelle toute caractérisation de la discontinuité 600 semble absente. Ainsi, un filtrage directionnel est opéré en au moins un point principal 700 en direction de l'orientation $\alpha$ 430 de sa fenêtre 400 de maximisation. Comme le montre la figure 11 qui est une représentation schématique d'un filtrage directionnel autour d'un point principal, ce filtrage peut être opéré en définissant un cadre 550 de points orienté selon l'orientation $\alpha$ 430 de la fenêtre 400 maximisant l'hétérogénéité de ce point principal. Ce cadre peut comprendre ce point principal 700 ainsi que d'autres points principaux 700 afin de pouvoir réaliser une comparaison entre ces les hétérogénéités de ces différents points. Le cadre 550 peut d'ailleurs être symétrique par rapport au point principal 700 ce qui permettra un filtrage à partir d'une zone de points homogène autour du point principal. Différentes méthodes de filtrage peuvent être appliquées. Ainsi, affecter à la fenêtre de maximisation du point principal autour duquel est défini le cadre l'hétérogénéité moyenne des fenêtres de maximisation des points principaux du cadre est une possibilité. Il est également possible de se fonder sur le principe que, si à l'intérieur du cadre 550, les points appartiennent à la même discontinuité 600, les valeurs des orientations $\alpha$ 430 des fenêtres 400 de maximisation de ces points sont sensiblement les mêmes. Dès lors, plus les fenêtres de maximisation des points du cadre ont une orientation éloignée de l'orientation $\alpha$ 430 de la fenêtre de maximisation du point principal 700 autour duquel le cadre est défini, plus la probabilité que ces points n'appartiennent pas à une discontinuité ou à la même discontinuité est forte. Ainsi, la fenêtre de maximisation du point principal 700 autour duquel le cadre est défini est affectée d'une valeur d'hétérogénéité prenant en compte la valeur d'hétérogénéité des différents points du cadre 550 pondérée par l'écart de ces points avec l'orientation $\alpha$ 430 de la fenêtre de maximisation du point principal autour duquel est défini le cadre. La pondération peut être effectuée selon la fonction 40 :

$$F(x,y) = \sum_{(i,j)\in F_a} C(i,j).\exp\left(-\frac{(\alpha(x,y)-\alpha(i,j))^2}{2.k^2}\right) \qquad (40)$$

où F(x,y) est la valeur d'hétérogénéité en un point principal 700 de coordonnées (x,y) après le filtrage directionnel.

Une discontinuité 600 étant souvent linéique, le cadre 550 sera avantageusement allongé pour épouser au mieux les formes d'une éventuelle discontinuité 600, comme exposé pour la forme préférentielle d'une fenêtre 400. Ce cadre s'étend avantageusement selon une direction. Sa base peut est plus étroite que sa hauteur dirigée selon l'orientation de la fenêtre de maximisation du point principal autour duquel est défini le cadre.

La détermination de la discontinuité 600 est opérée image 100 par image 100, i.e. de manière bidimensionnelle.

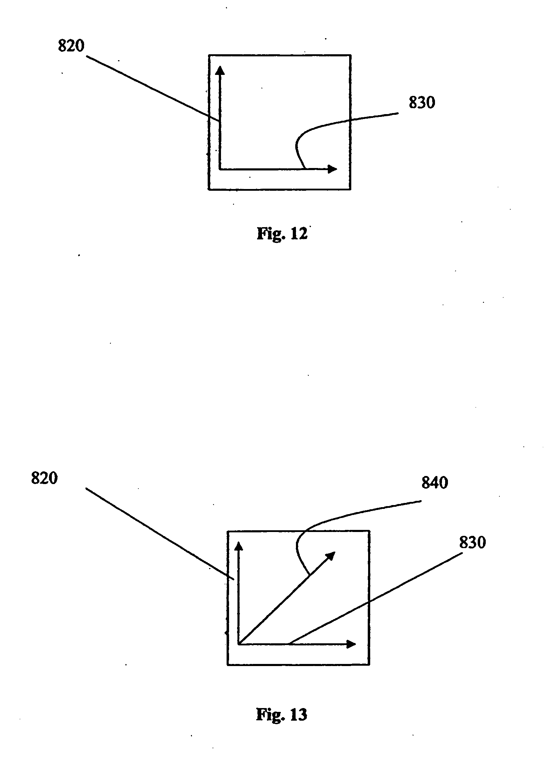

Une discontinuité 600 issue d'un ensemble tridimensionnel peut être déterminée puis reconstruite. Ceci peut être opéré en appliquant le procédé à des coupes de l'ensemble tridimensionnel, telles des coupes du sous-sol. Les éventuelles discontinuités peuvent être déterminées par l'application du procédé à des coupes de l'ensemble tridimensionnel orthogonales aux deux axes des coordonnées 820 et 830 de l'ensemble tridimensionnel comme le montre la figure 12 qui est une représentation schématique de deux directions de traitement de coupes d'un ensemble tridimensionnel. Il peut être avantageux d'effectuer une telle opération en ajoutant d'autres directions de traitement orthogonales aux coupes, telle la direction à 45° 840 de la figure 13 qui est une représentation schématique de trois directions de traitement de coupes d'un ensemble tridimensionnel. Une même discontinuité 600 présente dans différentes coupes est déterminée en opérant une corrélation des paramètres de cette discontinuité 600 entre les différentes coupes. Des méthodes d'approximation et d'interpolation peuvent notamment être utilisées pour effectuer la reconstruction.

Dans l'application au traitement de données sismiques, l'invention utilise le fait que les discontinuités présentent des formes différentes selon leur nature. Les discontinuités structurelles ou failles sont allongées et alignées; elles sont aussi verticales ou pseudo-verticales. A l'inverse, les discontinuités sédimentaires sont plus courtes. L'utilisation d'une fenêtre allongée permet de détecter efficacement des failles allongées. La pseudo-verticalité des failles - le fait que la direction générale des failles puisse être inclinée par rapport à la verticale - est prise en compte par l'angle que peuvent présenter les fenêtres avec la verticale et par le choix de plusieurs fenêtres. A l'inverse, les discontinuités sédimentaires, plus courtes que les failles sont statistiquement peu représentées dans les fenêtres.

La dimension des fenêtres peut avantageusement être ajustée en fonction de la nature des failles à détecter. On peut typiquement utiliser une fenêtre d'une dimension de 50 x 1 pixel, soit un allongement (rapport longueur sur largeur) de 50. Plus généralement un allongement de 20 ou plus permet de détecter les discontinuités structurelles, tout en éliminant la majorité des discontinuités sédimentaires.

Le nombre de fenêtres utilisées dépend de l'inclinaison des failles à détecter: plus l'on cherche à détecter des failles inclinées, plus le nombre de fenêtres est important.

L'angle entre deux fenêtres voisines dépend de la longueur des fenêtres et est choisi pour assurer qu'une faille du type recherché est bien couverte par une fenêtre. Pour un allongement de 50, on peut par exemple utiliser un angle entre deux fenêtres avec une tangente de 1/25, c'est-à-dire un angle de l'ordre de 7,2°. Un tel choix assure que les petits côtés de deux fenêtres voisines sont sensiblement adjacents; de la sorte, les fenêtres considérées recouvrent complètement le secteur angulaire balayé.

Dans un exemple, on a utilisé les valeurs suivantes

- calcul du gradient en tous les points de l'image;
- choix de points principaux espacés verticalement de 1 pixel et espacés horizontalement de 1 pixel, c'est-à-dire que tous les points de l'image sont principaux;
- fenêtre d'une dimension de 70 par 1 pixel;
- inclinaison limite des différentes fenêtres : 40°;
- angle entre deux fenêtres voisines : 2°;

Ces valeurs numériques permettent de déterminer les failles en une durée de calcul de 10 secondes, pour une image d'une dimension de 1000 x 1000 pixels. Le calcul s'effectue sur une station de travail de la marque HP, modèle XW8000, possédant 2 Go de RAM.

La présente invention concerne également un programme mettant en oeuvre le procédé décrit préalablement. Le programme peut comprendre une routine de réception d'une image 100 ; une routine de calcul du gradient 200 en plusieurs points 500 de l'image 100; une routine de caractérisation, autour d'un point 700, de fenêtres 400 de points 500 dont le gradient 200 a été calculé ; une routine d'évaluation de l'hétérogénéité de la distribution des gradients 200 dans la ou les fenêtres 400 ; une routine de sélection de la fenêtre 400 maximisant l'hétérogénéité et une routine de mesure de l'orientation de cette fenêtre 400 ; et une routine de détermination des discontinuités 600 à partir des valeurs d'hétérogénéité et d'orientation de la fenêtre 400 sélectionnée. Le programme réside sur un support lisible par ordinateur et comprend ainsi des moyens de code de programme informatique adaptés pour effectuer sur un ordinateur les étapes du procédé décrit plus haut.

Ce programme permet notamment d'améliorer l'art antérieur en offrant une meilleure visibilité des discontinuités 600 déterminées sur les images 100 étudiées. Ce programme permet également de déterminer automatiquement les plans de discontinuités 600, telles des failles, dans la mesure où l'information disponible, i.e. la détermination des discontinuités 600 de l'image, suite à l'application du procédé est uniquement liée à l'information structurale, i.e. les discontinuités 600, et non à l'information sédimentaire, telle les chenaux formés par les sédiments. Ce programme permet en outre d'améliorer l'analyse des relais, des réseaux de discontinuités 600, i.e. de failles. Il améliore donc la précision de l'étude d'un réservoir du sous-sol et l'analyse des étanchéités de ce réservoir, du sous-sol.

Le programme présente également l'ensemble des avantages attribués au procédé. La programmation des routines du programme est à la portée de l'homme du métier, compte tenu des indications fournies plus haut en référence aux figures. Afin de rendre la programmation de l'invention relativement aisée, il est préférable d'utiliser un langage de haut niveau, qui permette une programmation de type objet tel que le C++ ou le langage JAVA . On peut utiliser les bibliothèques de fonction mathématiques disponibles dans le commerce, notamment pour ce qui est du calcul du gradient ou encore des analyses statistiques.

La présente invention concerne également un système comprenant une mémoire contenant le programme décrit précédemment, une unité logique de traitement du programme, et une unité d'affichage. Ce système présente les mêmes avantages que ceux attribués au procédé et au programme.

**Revendications**

1. Procédé de recherche des informations structurelles relatives aux discontinuités dans une image sismique du sous-sol, comprenant les étapes de :

- calcul du gradient en plusieurs points de l'image ;
- autour d'un point principal, caractérisation d'au moins deux fenêtres de points dont les gradients ont été calculés, les deux fenêtres présentant une orientation différente ;
- évaluation de l'hétérogénéité de la distribution des gradients dans les fenêtres ;
- sélection de la fenêtre maximisant l'hétérogénéité et mesure de l'orientation de cette fenêtre ; et de
- détermination des discontinuités en fonction de la valeur d'hétérogénéité et de l'orientation de la fenêtre sélectionnée.

**2.** Le procédé selon la revendication 1, **caractérisé en ce qu'**il comprend, avant l'étape de calcul du gradient, une étape de lissage pour au moins un point avec ses points voisins.

**3.** Le procédé selon la revendication 1 ou 2, **caractérisé en ce que** l'étape de caractérisation comprend une étape de partition de toutes les fenêtres en sous-fenêtres alignées et **en ce que** l'étape d'évaluation comprend la multiplication des hétérogénéités des distributions des gradients dans les sous-fenêtres.

**4.** Le procédé selon l'une des revendications 1 à 3, **caractérisé en ce qu'**il comprend en outre, après l'étape de sélection, une étape de pondération des valeurs d'hétérogénéité de la distribution des gradients dans la fenêtre sélectionnée en fonction du caractère aléatoire de la distribution de ces valeurs d'hétérogénéité.

**5.** Le procédé selon l'une des revendications 1 à 4, **caractérisé en ce que** les fenêtres sont allongées.

**6.** Le procédé selon l'une des revendications 1 à 5, **caractérisé en ce que** :

- l'étape de caractérisation de fenêtres de points dont les gradients ont été calculés est opérée autour de plusieurs points principaux ;
- l'étape de sélection est opérée pour la fenêtre maximisant l'hétérogénéité autour de chaque point principal et l'étape de mesure est opérée pour les orientations des fenêtres sélectionnées ;
- l'étape de détermination des discontinuités est opérée en comparant les fenêtres sélectionnées.

**7.** Le procédé selon la revendication 6, **caractérisé en ce qu'**entre l'étape de sélection et de mesure et l'étape de détermination des discontinuités, il comprend en outre les étapes de :

- pour un point principal, définition d'un cadre orienté selon l'orientation de la fenêtre maximisant l'hétérogénéité de ce point principal et comprenant ce point principal et un ou plusieurs points principaux ; et de
- calcul de la valeur d'hétérogénéité moyenne des fenêtres maximisant l'hétérogénéité des points principaux de ce cadre et attribution de cette valeur comme valeur d'hétérogénéité au point principal pour lequel le cadre est défini.

**8.** Le procédé selon la revendication 7, **caractérisé en ce que** le calcul de la valeur d'hétérogénéité moyenne des fenêtres maximisant l'hétérogénéité des points principaux du cadre est effectué avec les valeurs d'hétérogénéité des points principaux de ce cadre pondérées en fonction de l'écart angulaire des fenêtres maximisant l'hétérogénéité de ces points avec l'orientation du cadre.

**9.** Le procédé selon la revendication 7 ou 8, **caractérisé en ce que** le cadre est allongé.

**10.** Le procédé selon l'une des revendications précédentes, dans lequel l'étape d'évaluation de l'hétérogénéité est réalisée par une analyse statistique des gradients opéré en utilisant la méthode d'Analyse en Composantes Principales.

**11.** Procédé de recherche d'une discontinuité dans un ensemble tridimensionnel de mesures comprenant la reconstruction d'une discontinuité tridimensionnelle avec des discontinuités déterminées par l'application d'un procédé selon l'une des revendications 1 à 10 à des coupes de l'ensemble tridimensionnel.

**12.** Un programme informatique résidant sur un support lisible par ordinateur, comprenant des moyens de code de programme informatique adaptés pour effectuer sur un ordinateur toutes les étapes du procédé selon l'une des revendications 1 à 11.

**13.** Un système comprenant :

- une mémoire contenant le programme selon la revendication 12 ;
- une unité logique de traitement du programme ; et
- une unité d'affichage.

**Claims**

1. Method for finding structural information concerning discontinuities in a seismic subsoil image, comprising the steps of:

   - calculating the gradient at a plurality of points of the image;
   - around a principal point, characterizing at least two windows of points whose gradients have been calculated, the two windows having a different orientation;
   - evaluating the heterogeneity of the distribution of the gradients in the windows;
   - selecting the window that maximizes the heterogeneity and measuring the orientation of this window; and
   - determining the discontinuities as a function of the heterogeneity value and the orientation of the selected window.

2. Method according to Claim 1, **characterised in that** the said method comprises, before the step of calculating the gradient, a smoothing step for at least one point with its neighbouring points.

3. Method according to Claim 1 or 2, **characterised in that** the characterization step comprises a step of partitioning all the windows into aligned sub-windows, and **in that** the evaluation step comprises multiplication of the heterogeneities of the distributions of the gradients in the sub-windows.

4. Method according to one of claims 1 to 3, **characterised in that** the said method furthermore comprises, after the selection step, a step of weighting the heterogeneity values of the distribution of the gradients in the selected window as a function of the random character of the distribution of these heterogeneity values.

5. Method according to one of claims 1 to 4, **characterised in that** the windows are elongated.

6. Method according to one of claims 1 to 5, **characterised in that:**

   - the step of characterizing windows of points whose gradients have been calculated is carried out around a plurality of principal points;
   - the selection step is carried out for the window that maximizes the heterogeneity around each principal point, and the measurement step is carried out for the orientations of the selected windows;
   - the step of determining the discontinuities is carried out by comparing the selected windows.

7. Method according to Claim 6, **characterised in that** between the selection and measurement step and the step of determining the discontinuities, the said method furthermore comprises the steps of:

   - for a principal point, defining a frame oriented according to the orientation of the window that maximizes the heterogeneity of this principal point and comprises this principal point and one or more principal points; and
   - calculating the average heterogeneity value of the windows that maximizes the heterogeneity of the principal points of the frame, and assigning this value as a heterogeneity value to the principal point for which the frame is defined.

8. Method according to Claim 7, **characterised in that** the calculation of the average heterogeneity value of the windows that maximizes the heterogeneity of the principal points of the frame is carried out with the heterogeneity values of the principal points of the frame weighted as a function of the angular offset of the frames that maximizes the heterogeneity of these points from the orientation of the frame.

9. Method according to Claim 7 or 8, **characterised in that** the frame is elongated.

10. The method according to one of the preceding claims, in which the heterogeneity evaluation step is performed by statistical analysis of gradients carried out using the principal component analysis method.

11. Method for finding a discontinuity in a three-dimensional set of measurements comprising the reconstruction of a three-dimensional discontinuity with discontinuities determined by applying a method according to one of claims 1 to 10 to sections of the three-dimensional set.

12. Computer program resident on a computer-readable medium, comprising computer program code means adapted to perform on a computer all of the steps of the method according to one of claims 1 to 11.

13. A system comprising:

   - a memory containing the programme according to claim 12;
   - a logic unit for processing the program; and
   - a display unit.


**Patentansprüche**

1. Verfahren zur Suche struktureller Informationen, die Diskontinuitäten in einem seismischen Bild des Untergrunds betreffen, das die folgenden Schritte umfasst:

   - Berechnung des Gradienten an mehreren Punkten des Bildes;
   - Kennzeichnung von mindestens zwei Fenstern von Punkten, deren Gradienten berechnet wurden, um einen Hauptpunkt herum, wobei die zwei Fenster eine unterschiedliche Ausrichtung aufweisen;
   - Bewertung der Heterogenität der Verteilung der Gradienten in den Fenstern;
   - Auswahl des Fensters, das die Heterogenität maximiert, und Messung der Ausrichtung dieses Fensters; und
   - Bestimmung der Diskontinuitäten in Abhängigkeit vom Heterogenitätswert und von der Ausrichtung des ausgewählten Fensters.

2. Verfahren nach Anspruch 1, **dadurch gekennzeichnet, dass** es vor dem Schritt der Berechnung des Gradienten einen Schritt der Glättung für mindestens einen Punkt mit seinen Nachbarpunkten umfasst.

3. Verfahren nach Anspruch 1 oder 2, **dadurch gekennzeichnet, dass** der Kennzeichnungsschritt einen Schritt der Aufteilung aller Fenster in fluchtende Unterfenster umfasst, und dass der Schritt der Bewertung die Multiplikation der Heterogenitäten der Verteilungen der Gradienten in den Unterfenstern umfasst.

4. Verfahren nach einem der Ansprüche 1 bis 3, **dadurch gekennzeichnet, dass** es ferner nach dem Auswahlschritt einen Schritt der Gewichtung der Heterogenitätswerte der Verteilung der Gradienten im in Abhängigkeit von der regellosen Eigenschaft der Verteilung dieser Heterogenitätswerte ausgewählten Fenster umfasst.

5. Verfahren nach einem der Ansprüche 1 bis 4, **dadurch gekennzeichnet, dass** die Fenster länglich sind.

6. Verfahren nach einem der Ansprüche 1 bis 5, **dadurch gekennzeichnet, dass:**

   - der Schritt der Kennzeichnung von Fenstern von Punkten, deren Gradienten berechnet wurden, um mehrere Hauptpunkte herum ausgeführt wird;
   - der Schritt der Auswahl für das Fenster ausgeführt wird, das die Heterogenität um jeden Hauptpunkt herum maximiert, und der Schritt der Messung für die Ausrichtungen der ausgewählten Fenster ausgeführt wird;
   - der Schritt der Bestimmung der Diskontinuitäten durch Vergleichen der ausgewählten Fenster ausgeführt wird.

7. Verfahren nach Anspruch 6, **dadurch gekennzeichnet, dass** es zwischen dem Schritt der Auswahl und der Messung und dem Schritt der Bestimmung der Diskontinuitäten ferner die folgenden Schritte umfasst:

   - für einen Hauptpunkt, Definition eines Rahmens, der gemäß der Ausrichtung des Fensters ausgerichtet ist, das die Heterogenität dieses Hauptpunkts maximiert und diesen Hauptpunkt und einen oder mehrere Hauptpunkte umfasst; und
   - Berechnung des mittleren Heterogenitätswerts der Fenster, die die Heterogenität der Hauptpunkte dieses Rahmens maximieren, und Zuordnung dieses Werts als Heterogenitätswert zum Hauptpunkt, tür den der Rahmen definiert wird.

**8.** Verfahren nach Anspruch 7, **dadurch gekennzeichnet, dass** die Berechnung des mittleren Heterogenitätswerts der Fenster, die die Heterogenität der Hauptpunkte des Rahmens maximieren, mit den Heterogenitätswerten der Hauptpunkte dieses Rahmens durchgeführt wird, die in Abhängigkeit von der Winkelabweichung der Fenster, die die Heterogenität dieser Punkte maximieren, mit der Ausrichtung des Rahmens gewichtet werden.

**9.** Verfahren nach Anspruch 7 oder 8, **dadurch gekennzeichnet, dass** der Rahmen länglich ist.

**10.** Verfahren nach einem der vorhergehenden Ansprüche, wobei der Schritt der Bewertung der Heterogenität durch eine statistische Analyse der Gradienten durchgeführt wird, die unter Verwendung des Verfahrens der Hauptkomponentenanalyse ausgeführt wird.

**11.** Verfahren zur Suche einer Diskontinuität in einer dreidimensionalen Gesamtheit von Messungen, das die Rekonstruktion einer dreidimensionalen Diskontinuität mit Diskontinuitäten umfasst, die durch die Anwendung eines Verfahrens nach einem der Ansprüche 1 bis 10 auf Schnitte der dreidimensionalen Gesamtheit bestimmt werden.

**12.** Informatikprogramm, das auf einem maschinenlesbaren Träger gespeichert ist, das Informatikprogrammcode-Mittel umfasst, die angepasst sind, um alle Schritte des Verfahrens nach einem der Ansprüche 1 bis 11 auf einem Computer auszuführen.

**13.** System, das Folgendes umfasst:

- einen Speicher, der das Programm nach Anspruch 12 enthält;
- eine logische Einheit zur Verarbeitung des Programms; und
- eine Anzeigeeinheit.

EP 1 707 993 B1

**Fig. 1**

**Fig. 2**

Fig. 3

**Fig. 4**

**Fig. 5**

Fig. 6

**Fig. 7**

**Fig. 8**

**Fig. 9**

**Fig. 10**

**Fig. 11**

820

830

**Fig. 12**

820

840

830

**Fig. 13**

**RÉFÉRENCES CITÉES DANS LA DESCRIPTION**

**Documents brevets cités dans la description**

- US 5563949 A
- US 5831935 A
- US 5986974 A
- FR 2765707 A
- EP 1058131 A